# FASCICULE DE BREVET EUROPEEN

(11) **EP 0 768 746 B1**
(45) Date de publication et mention de la délivrance du brevet: **16.05.2001**
(21) Numéro de dépôt: 96402067.1
(22) Date de dépôt: 27.09.1996
(51) Int. Cl.: H02J 7/34

(54) **Chargeur-démarreur électronique pour véhicule**
Elektronische Lade- und Startvorrichtung für ein Fahrzeug
Electronic charger/starter for a vehicle

(30) Priorité: 12.10.1995 FR 9511997
(43) Date de publication de la demande: 16.04.1997
(73) Titulaire: LACME, 92250 La Garenne Colombes (FR)
(72) Inventeur: Hamm, Valéry, 72200 La Fleche (FR); Mulet-Marquis, Yves, 49770 La Meignanne (FR)
(74) Mandataire: Laget, Jean-Loup

(56) Documents cités:
- EP-A- 0 232 159
- DE-A- 4 123 168
- GB-A- 2 026 792
- SU-A- 1 020 919
- SU-A- 1 534 632

## Description

L'invention concerne un chargeur-démarreur électronique pour véhicule.

Un chargeur-démarreur pour véhicule comporte usuellement un transformateur dont le primaire est alimenté en courant redressé et lissé sous le contrôle d'un transistor fonctionnant en hacheur, et dont le secondaire charge une batterie ou alimente un démarreur, par l'intermédiaire d'une diode. Un tel chargeur-démarreur délivre au secondaire une tension et un courant susceptibles de varier sans que leur valeur maximale soit bien définie.

Un avantage de l'invention est de permettre l'utilisation d'une alimentation en courant redressé sans lissage pour alimenter le primaire du transformateur.

Le document US 5.304.917 décrit un chargeur de batterie pour téléphone cellulaire, utilisant la technologie fly-back de découpage à haute fréquence. Le niveau du courant de charge dépend du niveau de charge de la batterie. Lorsque la tension de la batterie est faible, le courant de charge est élevé pour assurer une charge rapide. Lorsque la tension de la batterie approche de la tension nominale, le courant de charge diminue pour assurer une charge lente.

Le document SU 1.534.632 décrit un chargeur-démarreur électronique pour véhicule utilisant un régulateur à thyristors pour stabiliser le courant de charge et assurer la protection contre les surcharges et les inversions de connexions de batterie.

Un but de l'invention est de proposer un chargeur-démarreur dont la tension au secondaire ne dépasse pas une valeur maximale prédéterminée.

Un autre but de l'invention est de proposer un chargeur-démarreur dont le courant au secondaire soit en chargeur, soit en démarreur, ne dépasse pas une valeur maximale prédéterminée.

Un autre but encore de l'invention est de proposer un chargeur-démarreur qui, soit en chargeur, soit en démarreur, fonctionne à l'intensité maximale du courant au secondaire, tant qu'une tension maximale prédéterminée n'est pas atteinte.

La présente invention a pour objet un chargeur-démarreur électronique pour véhicule, utilisant un transformateur dont le primaire est alimenté en courant alternatif redressé sans lissage et dont le secondaire, par l'intermédiaire d'une diode, charge une batterie ou alimente un démarreur,mis en parallèle sur la batterie au moyen d'un contact, caractérisé en ce qu'il comporte : d'une part un circuit de contrôle du courant secondaire, d'autre part un circuit de contrôle de la tension secondaire, de telle sorte que le courant de charge de la batterie et le courant de démarrage aient chacun une valeur maximale définie, et que la tension maximale aux bornes de la batterie ait une valeur définie, le choix entre le courant de charge et le courant de démarrage étant effectué par la manoeuvre d'un interrupteur.

Selon d'autres caractéristiques de l'invention :
- lors du fonctionnement du chargeur-démarreur en mode démarreur choisi par la manoeuvre de l'interrupteur, la fourniture du courant de démarrage est controlée automatiquement par l'actionnement de la clef de contact du véhicule mettant en parallèle la batterie et le démarreur ;
- le primaire du transformateur est alimenté par l'intermédiaire d'un transistor fonctionnant en hacheur, la largeur des impulsions de conduction du transistor étant réglée par l'intermédiaire d'un modulateur de largeur d'impulsion.
- le circuit de contrôle du courant au secondaire comprend une resistance montée en série avec ledit transistor, et des résistances donnant en un point de mesure une tension image du courant au secondaire et appliquée à une entrée dudit modulateur de largeur d'impulsion.
- le circuit de contrôle de la tension au secondaire comprend une résistance et une diode électro-luminescente dont le flux lumineux est proportionnel à la tension au secondaire.
- le circuit de contrôle de la tension au secondaire comprend en outre un photo-transistor recevant le flux lumineux de ladite diode électro-luminescente, et une résistance, donnant en leur point commun une tension image de la tension au secondaire et appliquée à une autre entrée dudit modulateur de largeur d'impulsion.
- un interrupteur est monté en parallèle sur l'une desdites résistances pour assurer, par sa fermeture, le fonctionnement en démarreur.
- pendant la charge de la batterie, le courant de charge est à sa valeur maximale I_{B} tant que la tension aux bornes de la batterie n'atteint pas sa valeur maximale V_{B}.
- pendant le démarrage, le courant du démarrage est à sa valeur maximale I_{D} tant que la tension aux bornes de la batterie n'atteint pas sa valeur maximale V_{B}.

D'autres caractéristiques ressortent de la description qui suit faite avec référence aux dessins annexés, dans lesquels :
- la figure 1 représente un schéma de principe du chargeur-démarreur selon l'invention ;
- la figure 2 représente la caractéristique courant-tension du chargeur-démarreur selon l'invention ;
- la figure 3 représente un schéma électrique simplifié d'un exemple de réalisation d'un chargeur-démarreur selon l'invention.

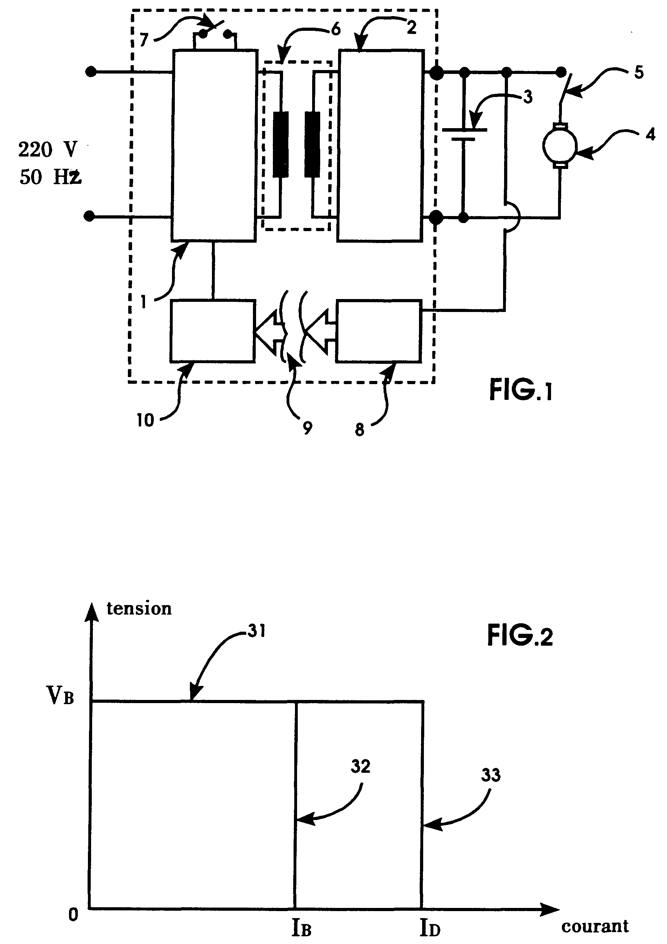

Sur la figure 1, le chargeur-démarreur électronique se compose essentiellement d'un circuit électronique haute tension 1, d'un circuit électronique basse tension 2 et d'un transformateur 6 qui assure l'isolement électrique entre les deux circuits 1 et 2. Le circuit électronique basse tension 2 alimente une batterie 3 du véhicule ou, par l'intermédiaire d'un interrupteur 5 du véhicule, un démarreur 4 du véhicule. Un circuit électronique 8 prélève la basse tension aux bornes de la batterie du véhicule et transmet l'information correspondante par l'intermédiaire d'une transmission isolée électriquement 9 à un contrôleur d'énergie 10 qui agit sur le circuit électronique haute tension 1 de façon que la tension aux bornes de la batterie ne dépasse pas une valeur donnée.

Le circuit électronique haute tension 1 prélève de l'énergie sur le réseau alternatif de distribution (220 V, 50 Hz). T1 transmet cette énergie au circuit électronique basse tension 2 par l'intermédiaire du transformateur 6. Le circuit électronique basse tension 2 délivre à la batterie 3 du véhicule un courant de charge. La transmission d'énergie se fait en général à une fréquence de l'ordre de 40 KHz très supérieure à celle du réseau alternatif, ce qui permet une diminution de la taille et de la masse du chargeur-démarreur.

Le circuit électronique haute-tension 1 comporte un moyen de limitation du courant prélevé sur le réseau, pour protéger les circuits électroniques 1 et 2 contre toute détérioration, et pour contrôler le courant délivré à la batterie 3 du véhicule ou au démarreur 4 du véhicule. Un interrupteur 7 manoeuvrable par l'utilisateur, permet de choisir la valeur maximale du courant suivant la phase en cours : démarrage ou charge de batterie.

L'association du moyen de limitation du courant et du contrôleur d'énergie 10 permet d'obtenir au niveau de la batterie 3 du véhicule et/ou du démarreur 4 du véhicule, une caractéristique de la tension en fonction du courant représentée à la figure 2.

Sur la figure 2, I_{B} représente le courant de charge de la batterie du véhicule lorsque l'interrupteur 7 est ouvert, I_{D} le courant de démarrage lorsque l'interrupteur 7 est fermé, et V_{B} la tension maximale aux bornes de la batterie 3 du véhicule.

Tant que la tension aux bornes de la batterie est inférieure à V_{B}, la batterie 3 est chargée par un courant I_{B} et le point de fonctionnement remonte la branche 32. Lorsque la tension atteint V_{B}, le point de fonctionnement se déplace sur la branche 31 et le courant de charge diminue jusqu'à zéro.

De même lorsque l'interrupteur 7 est fermé, le courant de démarrage prend la va leur I_{D} jusqu'à ce que le tension atteigne la valeur V_{B} : le point de fonctionnement se déplace sur la branche 33, puis sur la branche 31.

Ainsi, aussi bien en chargeur qu'en démarreur, le chargeur-démarreur selon l'invention assure la montée en tension sous l'intensité maximale I_{B} ou I_{D}, respectivement. Puis, lorsque la tension maximale V_{B} est atteinte, le courant revient à zéro. Le chargeur-démarreur assure donc automatiquement la charge de la batterie à la valeur maximale prédéterminée de la tension, sans risque de détérioration par surcharge.

En phase de démarrage, l'action sur la clé de contact du véhicule ferme le contact 5 du véhicule, mettant en parallèle la batterie 3 du véhicule et le démarreur 4 du véhicule. Le courant de démarrage prend la valeur maximale I_{D} et le point de fonctionnement se déplace sur la branche 33. Si la tension atteint la valeur V_{B}, le point de fonctionnement se déplace sur la branche 31. A aucun moment la tension ne dépasse la valeur V_{B}. La batterie du véhicule ou l'électronique embarquée du véhicule ne risquent plus d'être détériorées par une tension trop élevée.

Il faut noter que c'est l'action sur la clé de contact du véhicule qui, commandant la fermeture et l'ouverture du contact 5 du véhicule, contrôle automatiquement la fourniture du courant de démarrage. Il n'est plus nécessaire, comme dans les chargeurs-démarreurs classiques, d'effectuer une commande manuelle sur le chargeur-démarreur à l'instant approprié pour déclencher la fourniture du courant de démarrage.

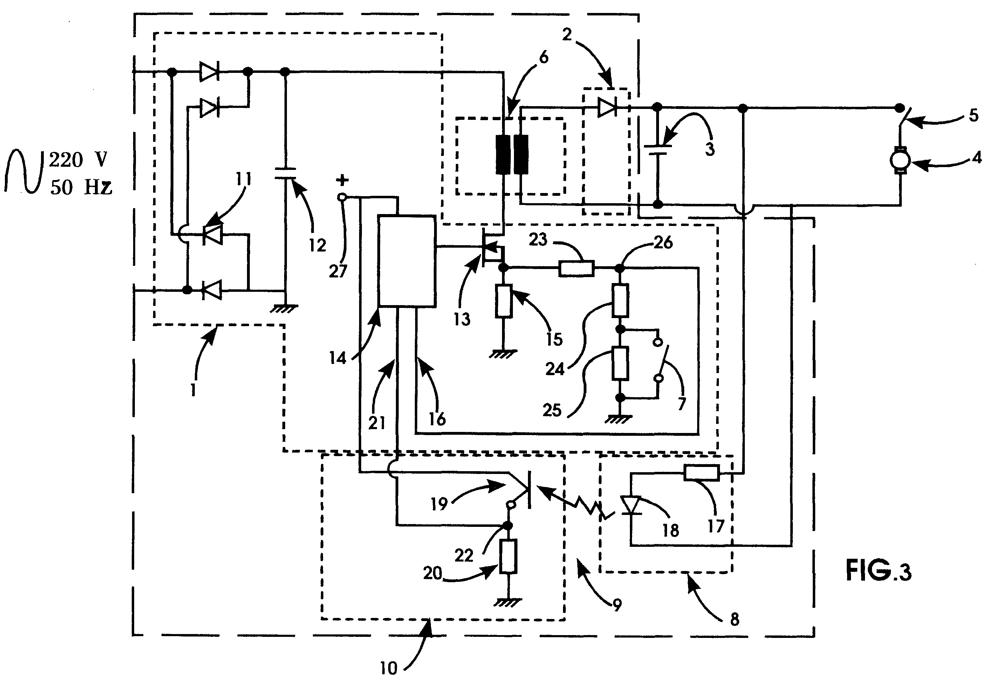

Sur la figure 3, les références 1 à 10 désignent les mêmes éléments que sur la figure 1. Le circuit électronique haute tension 1 est composé d'un pont redresseur 11, d'une capacité de faible valeur 12, d'un transistor de puissance 13 piloté en mode de commutation par un modulateur de largeur d'impulsion 14, et d'un jeu de résistances 15, 23, 24, 25. La résistance 15 est en série avec le transistor 13 et le primaire du transformateur 6. La résistance 23 est branchée entre le point commun au transistor 13 et à la résistance 15 et le point de mesure 26. Les résistances 24 et 25 sont montées entre le point de mesure 26 et la masse. Aux bornes de la résistance 25 est disposé l'interrupteur 7. Le point de mesure 26 est relié à l'entrée 16 du modulateur de largeur d'impulsion 14.

En parallèle sur la batterie 3 du véhicule, le circuit électronique 8, constitué d'une résistance 17 et d'une diode électro-luminescente 18, prélève la tension aux bornes de la batterie et la transforme en une information lumineuse : le flux lumineux émis par la diode 18 est proportionnel à la tension de la batterie 3 du véhicule. La liaison électriquement isolée 9 entre le circuit électronique 8 et le contrôleur d'énergie 10 est une liaison photonique.

Le contrôleur d'énergie 10 se compose d'un photo-transistor 19 en série avec une résistance 20. Le photo-transistor 19 reçoit le flux lumineux de la diode 18. Le point commun 22 au photo-transistor 19 et à la résistance 20 est alors une tension proportionnelle à celle de la batterie 3 du véhicule, et cette tension est appliquée à une autre entrée 21 du modulateur de largeur d'impulsion 14.

Le modulateur de largeur d'impulsion 14 et le photo-transistor 19 sont alimentés par une tension de quelques volts symbolisée en 27.

Tl y a un isolement électrique entre d'une part le primaire du transformateur 6, le circuit électronique haute tension 1 et le contrôleur d'énergie 10, et d'autre part le secondaire du transformateur 6, le circuit électronique basse tension 2, le circuit électronique 8, la batterie 3 du véhicule et le démarreur 4 du véhicule.

L'ensemble de la diode électro-luminescente 18 et du photo-transistor 19 peut être constitué de deux éléments discrets ou d'un photocoupleur intégré.

Le fonctionnement du chargeur-démarreur électronique de la figure 3 s'analyse de la manière suivante en supposant l'interrupteur 7 ouvert, ce qui correspond au fonctionnement au chargeur de batterie.

Le transistor 13 assure la charge de la batterie 3 du véhicule. Les résistances 15, 23, 24 et 25 fournissent au point de mesure 26 une tension image du courant traversant le transistor 13. Cette tension est appliquée à l'entrée 16 du modulateur de largeur d'impulsion 14 qui agit sur la durée de conduction du transistor 13 pour limiter à la valeur I_{B} le courant traversant le transistor 13. La charge de la batterie 3 du véhicule s'effectue alors à la valeur I_{B} du courant, selon la branche 32 de la figure 2.

Si, pour procéder à un démarrage, l'interrupteur 7 est fermé, alors le point de mesure 26 délivre une tension appliquée à l'entrée 16 du modulateur de largeur d'impulsion 14, qui agit sur la durée de conduction du transistor 13 pour limiter à la valeur I_{D} le courant traversant le transistor 13. Le démarrage s'effectue alors à la valeur I_{D} de courant, selon la branche 33 de la figure 2.

Tant que la tension aux bornes de la batterie 3 du véhicule est inférieure à la valeur prédéterminée V_{B}, c'est l'information de tension sur l'entrée 16 du modulateur de largeur d'impulsion 14 qui est prise en compte. Lorsque la tension aux bornes de la batterie atteint la valeur prédéterminée V_{B}, c'est l'information de tension sur l'entrée 21 du modulateur de largeur d'impulsion qui est prise en compte, c'est-à-dire que la branche 31 de la figure 2 constitue une limite de tension non franchie.

## Revendications

1. Chargeur-démarreur électronique pour véhicule, utilisant un transformateur dont le primaire est alimenté en courant alternatif redressé sans lissage et dont le secondaire, par l'intermédiaire d'une diode, charge une batterie ou alimente un démarreur mis en parallèle sur la batterie au moyen d'un contact, caractérisé en ce qu'il comporte : d'une part un circuit de contrôle du courant secondaire, d'autre part un circuit de contrôle de la tension secondaire, de telle sorte que le courant de charge de la batterie, et le courant de démarrage aient chacun une valeur maximale définie (I_{**B**}, I_{**D**}), et que la tension maximale aux bornes de la batterie ait une valeur définie (V_{**B**}), le choix entre le courant de charge et le courant de démarrage étant effectué par la manoeuvre d'un interrupteur (7).

2. Chargeur-démarreur selon la revendication 1, caractérisé en ce que lors du fonctionnement dudit chargeur-démarreur en mode démarreur choisi par la manoeuvre de l'interrupteur (7), la fourniture du courant de démarrage est contrôlée automatiquement par l'actionnement de la clef de contact de véhicule mettant en parallèle la batterie (3) et le démarreur (4).

3. Chargeur-démarreur selon la revendication 1 ou 2, caractérisé en ce que le primaire du transformateur est alimenté par l'intermédiaire d'un transistor (13) fonctionnant en hacheur, la largeur des impulsions de conduction du transistor (13) étant réglée par l'intermédiaire d'un modulateur de largeur d'impulsion (14).

4. Chargeur-démarreur selon la revendication 3, caractérisé en ce que le circuit de contrôle du courant au secondaire comprend une résistance (15) montée en série avec ledit transistor (13), et des résistances (23, 24, 25) donnant en un point de mesure (26) une tension image du courant au secondaire et appliquée à une entrée (16) dudit modulateur de largeur d'impulsion (14).

5. Chargeur-démarreur selon la revendication 3, caractérisé en ce que le circuit de contrôle de la tension au secondaire comprend une résistance (17) et une diode électro-luminescente (18) dont le flux lumineux est proportionnel à la tension au secondaire.

6. Chargeur-démarreur selon la revendication 5, caractérisé en ce que le circuit de contrôle de la tension au secondaire comprend en outre un photo-transistor (19) recevant le flux lumineux de ladite diode électro-luminescente (18), et une résistance (20), donnant en leur point commun (22) une tension image de la tension au secondaire et appliquée à une autre entrée (21) dudit modulateur de largeur d'impulsion (14).

7. Chargeur-démarreur selon la revendication 4, caractérisé en ce que un interrupteur (7) est monté en parallèle sur l'une (25) desdites résistances (23, 24, 25) pour assurer, par sa fermeture, le fonctionnement en démarreur.

8. Chargeur-démarreur selon la revendication 1, caractérisé en ce que pendant la charge de la batterie (3), le courant de charge est à sa valeur maximale I_{B} tant que la tension aux bornes de la batterie (3) n'atteint pas sa valeur maximale V_{B}.

9. Chargeur-démarreur selon la revendication 1 ou 2, caractérisé en ce que pendant le démarrage, le courant du démarrage est à sa valeur maximale I_{D} tant que la tension aux bornes de la batterie n'atteint pas sa valeur maximale V_{B}.

## Patentansprüche

1. Elektronisches Anlasser-Ladegerät für Fahrzeuge, mit einem Transformator, dessen Primärseite ein gleichgerichteter Wechselstrom ohne Glättung zugeführt wird und dessen Sekundärseite mittels einer Diode eine Batterie lädt oder einen Anlasser versorgt, der durch einen Kontakt parallel zur Batterie geschaltet ist, dadurch gekennzeichnet, dass es aufweist: einerseits eine Schaltung zur Überwachung des Sekundärstroms und andererseits eine Schaltung zur Überwachung der Sekundärspannung derart, dass der Batterieladestrom und der Anlasserstrom jeweils einen definierten maximalen Wert (IB, ID) haben und die maximale Spannung an den Klemmen der Batterie einen definierten Wert (VB) hat, wobei die Wahl zwischen dem Ladestrom und dem Anlasserstrom durch Betätigen eines Schalters (7) bewirkt wird.

2. Anlasser-Ladegerät nach Anspruch 1; dadurch gekennzeichnet, dass beim Betrieb des Anlasser-Ladegeräts in der durch Betätigung des Schalters (7) ausgewählten Anlasser-Betriebsart die Zuführung des Anlasserstroms automatisch durch die Betätigung des Fahrzeug-Zündschlüssels gesteuert wird, die die Batterie (3) und den Anlasser (4) parallel schaltet.

3. Anlasser-Ladegerät nach Anspruch 1 oder 2, dadurch gekennzeichnet, dass die Primärseite des Transformators über einen als Zerhacker arbeitenden Transistor (13) mit Strom versorgt wird, wobei die Breite der Leitungsimpulse des Transistors (13) über einen Impulsbreiten-Modulator (14) eingestellt wird.

4. Anlasser-Ladegerät nach Anspruch 3, dadurch gekennzeichnet, dass zur Überwachung des Stroms an der Sekundärseite die Schaltung einen mit dem Transistor (13) in Serie geschalteten Widerstand (15) sowie Widerstände (23, 24, 25) aufweist, die in einem Messpunkt (26) eine Bildspannung des Stroms an der Sekundärseite ergibt, wobei diese Bildspannung an einem Eingang (16) des Impulsbreiten-Modulators (14) anliegt.

5. Anlasser-Ladegerät nach Anspruch 3, dadurch gekennzeichnet, dass die Schaltung zur Überwachung der Spannung an der Sekundärseite einen Widerstand (17) und eine Leuchtdiode (18) aufweist, deren Lichtfluss proportional zur Spannung an der Sekundärseite ist.

6. Anlasser-Ladegerät nach Anspruch 5, dadurch gekennzeichnet, dass die Schaltung zur Überwachung der Spannung an der Sekundärseite ausserdem einen Photo-Transistor (19), der den Lichtfluss von der Leuchtdiode empfängt, sowie einen Widerstand (20) aufweist, die an ihrem gemeinsamen Punkt (22) eine Bildspannung der Spannung an der Sekundärseite ergeben, wobei diese Bildspannung an einem anderen Eingang (21) des Impulsbreiten-Modulators (14) anliegt.

7. Anlasser-Ladegerät nach Anspruch 4, dadurch gekennzeichnet, dass der Schalter (7) parallel zu einem (25) der Widerstände (23, 24, 25) geschaltet ist, um durch sein Schliessen den Anlasser-Betrieb zu gewährleisten.

8. Anlasser-Ladegerät nach Anspruch 1, dadurch gekennzeichnet, dass während des Ladens der Batterie (3) der Ladestrom auf seinem maximalen Wert IB ist, solange die Spannung an den Klemmen der Batterie (3) nicht ihren maximalen Wert VB erreicht.

9. Anlasser-Ladegerät nach Anspruch 1 oder 2, dadurch gekennzeichnet, dass während des Anlassens der Anlasserstrom auf seinem maximalen Wert ID ist, solange die Spannung an den Klemmen der Batterie (3) nicht ihren maximalen Wert VB erreicht.

## Claims

1. Electronic charging and starting device for vehicles, using a transformer whose primary winding is supplied with unsmoothed rectified alternating current and whose secondary winding, via a diode, charges a battery or supplies a starter motor connected in parallel with the battery by means of a contact,
**characterised in that**
it comprises: on the one hand, a circuit to control the voltage across the secondary winding such that the battery charging current and the starter current each have a defined maximum value (I_{B}, I_{D}), and the maximum voltage across the terminals of the battery has a defined value (V_{B}), the choice between the charging current and the starter current being made by operating a switch (7).

2. Charging and starting device according to Claim 1,
**characterised in that**
during the operation of the said charging and starting device in the starting mode selected by operating the switch (7), the supply of starter current is controlled automatically by actuation of the vehicle's contact key which connects the battery (3) and the starter motor (4) in parallel.

3. Charging and starting device according to Claims 1 or 2,
the primary winding of the transformer is supplied via a transistor (13) operating as a wave-chopper, the width of the conduction pulses of the transistor (13) being controlled via a pulse width modulator (14).

4. Charging and starting device according to Claim 3,
**characterised in that**
the control circuit for the current in the secondary winding comprises a resistor (15) connected in series with the said transistor (13), and resistors (23, 24, 25) that produce at a measurement point (26) a voltage which images the current in the secondary winding and is applied to an input (16) of the said pulse width modulator (14).

5. Charging and starting device according to Claim 3,
**characterised in that**
the control circuit for the voltage across the secondary winding comprises a resistor (17) and an electro-luminescent diode (18) whose brightness is proportional to the voltage across the secondary winding.

6. Charging and starting device according to Claim 5,
**characterised in that**
the control circuit for the voltage across the secondary winding also comprises a photo-transistor (19) that receives the luminous flux from the said electro-luminescent diode (18), and a resistor (20) which gives at their common point (22) a voltage imaging the voltage across the secondary winding and is applied to another input (21) of the said pulse width modulator (14).

7. Charging and starting device according to Claim 4,
**characterised in that**
the switch (7) is connected in parallel across one (25) of the said resistors (23, 24, 25) so as to ensure, when it is closed, that the device operates in the starter mode.

8. Charging and starting device according to Claim 1,
**characterised in that**
during the charging of the battery (3) the charging current is at its maximum value I_{B}, while the voltage across the terminals of the battery (3) does not reach its maximum value V_{B}.

9. Charging and starting device according to Claims 1 or 2,
**characterised in that**
during staring, the starter current is at its maximum value I_{D} while the voltage across the battery terminals does not reach its maximum value V_{B}.
